(19) Europäisches Patentamt
European Patent Office
Office européen des brevets

(11) **EP 2 731 249 A1**

(12) **EUROPEAN PATENT APPLICATION**

(43) Date of publication:
**14.05.2014 Bulletin 2014/20**

(51) Int Cl.:
***H02M 7/217*** (2006.01)   ***H05B 33/08*** (2006.01)
***H02M 1/00*** (2007.01)

(21) Application number: **13275137.1**

(22) Date of filing: **07.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.11.2012 KR 20120126324**

(71) Applicant: **Samsung Electro-Mechanics Co., Ltd Suwon, Gyunggi-Do (KR)**

(72) Inventors:
• **Han,, Sang Kyoo**
  **Daejeon (KR)**

• **Kim,, Jin Hwan**
  **Gyunggi-do (KR)**
• **Kim,, Ji Young**
  **Gyunggi-do (KR)**
• **Park,, Hong Sun**
  **Gyunggi-do (KR)**
• **Kim,, Sung Cheol**
  **Gyunggi-do (KR)**
• **Kim,, Sang Dae**
  **Gyunggi-do (KR)**

(74) Representative: **Potter Clarkson LLP**
**The Belgrave Centre**
**Talbot Street**
**Nottingham, NG1 5GG (GB)**

(54) **Power supply apparatus for illumination**

(57) Provided are a power supply apparatus and a power supply apparatus for illumination that can resolve a power imbalance between an LCC resonant inverter and a driving circuit by controlling switching of a DC conversion circuit connected to a rear end of the LCC resonant inverter. The power supply apparatus and the power supply apparatus for illumination, include: an inverter converting input power into AC power having a preset level; and a converter rectifying the AC power having the preset level output from the inverter, and switching the rectified AC power and converting the switched power into DC power, and increasing an input-output power duty ratio when a level of the DC power is higher than a target power level and decreasing the input-output power duty ratio when the power level of the DC power is lower than the target power level.

100

FIG. 1

EP 2 731 249 A1

**Description**

**CROSS-REFERENCE TO RELATED APPLICATIONS**

This application claims the priority of Korean Patent Application No. 10-2012-0126324 filed on November 8, 2012, in the Korean Intellectual Property Office, the disclosure of which is incorporated herein by reference.

**BACKGROUND OF THE INVENTION**

**Field of the Invention**

The present invention relates to a power supply apparatus for illumination that resolve a power imbalance between input power and output power.

**Description of the Related Art**

In general, fluorescent lamps contain hazardous materials such as mercury, have a relatively short lifespan of 10,000 hours or less, and human eye strain therefrom may be severe due to a low-frequency flicker. On the contrary, since light emitting diodes (LEDs) contain no hazardous materials, there is no concern about environmental pollution resulting therefrom, while the level of low-frequency flicker produced thereby is low, due to high-frequency driving.
Moreover, since LEDs have a relatively low degree of power consumption, approximately 75% of that of fluorescent lamps, and have a relatively long life-span of 40000 hours or more, LEDs are seen as next-generation illumination light sources, suitable for use in the age of high energy prices and environmental friendliness, and as a result, research into LED devices and driving circuits therefor has been undertaken in recent years.
In substituting LEDs for fluorescent lamps, it may be inconvenient and relatively expensive to reinstall illumination facilities suitable for LED illumination, requiring DC driving, after ballast stabilizers for fluorescent lamps driven with existing alternating current (AC) voltage have been removed. Therefore, recently, demand for an LED driving circuit compatible with a ballast stabilizer used in fluorescent lamp fittings is increasing, so as to allow fluorescent lamps to be replaced with LED illumination lamps while using established illumination fittings as they is, as in the following Related Art Document.
In LED driving circuits compatible with ballast stabilizers for fluorescent lamps, since a high voltage is required when the fluorescent lamp is initially operated, an LCC resonant inverter which can boost the voltage of the invention disclosed in the following Related Art Document is used as the ballast stabilizer for the fluorescent lamp, and an additional driving circuit in series connected to a rear end of the ballast stabilizer is required to drive the LED with the LCC resonant inverter as an input.
However, in this case, voltage stress may be applied excessively to a circuit element due to a power imbalance between the LCC resonant inverter and the driving circuit.

[Related Art Document]

Korean Patent Laid-Open Publication No. 10-2012-0098441

**SUMMARY OF THE INVENTION**

An aspect of the present invention provides a power supply apparatus for illumination that can resolve a power imbalance between an LCC resonant inverter and a driving circuit by controlling switching of a direct current (DC) conversion circuit connected to a rear end of the LCC resonant inverter.
According to an aspect of the present invention, there is provided a power supply apparatus for illumination, including: a conversion unit switching rectified alternating current (AC) power having a preset level and converting the switched power into DC power, and supplying the converted power to an illumination body; and a control unit increasing an input-output power duty ratio when a level of the DC power is higher than a target power level and decreasing the input-output power duty ratio when a power level of the DC power is lower than the target power level.
The power supply apparatus for illumination may further include an inverter converting input power into AC power having a preset level.
The inverter may be a resonant inverter.
The resonant inverter may be an inductor-capacitor-capacitor (LCC) resonant inverter.
The converter may include: a rectifying unit rectifying the AC power having the preset level output from the inverter; a conversion unit switching the rectified AC power having the preset level provided from the rectifying unit according to a control and converting the switched power into DC power; and a control unit comparing the level of the DC power of the conversion unit and the target power level to increase a switching duty of the conversion unit when the level of the DC power is higher than the target power level, decrease the switching duty of the conversion unit when the level of the DC power is lower than the target power level, and maintain the switching duty of the conversion unit when the level of the DC power is the same as the target power level.

The control unit may include a first comparator forming positive feedback by receiving a predetermined reference voltage through a negative terminal and receiving a detection voltage detecting output power of the conversion unit through a positive terminal to thus compare the reference voltage and the detection voltage; and a second comparator comparing a comparison result signal of the first comparator and a predetermined reference signal to control the switching of the conversion unit.

The control unit may include a first comparator forming positive feedback by receiving a predetermined reference voltage through a negative terminal and receiving a detection voltage detecting output power of the conversion unit through a positive terminal to thus compare the reference voltage and the detection voltage; a second comparator comparing a comparison result signal of the first comparator and a detection current detecting a current generated in switching performed by the conversion unit; and a reset set (RS) latch controlling the switching of the conversion unit by logically operating a predetermined reference clock signal and a comparison result of the second comparator.

The rectifying unit may include a half wave or full wave rectifying circuit and the rectifying unit may further include an inductor-capacitor (L-C) filter or a capacitor (C) filter.

The conversion unit may be configured by one of an insulated conversion circuit and a non-insulated conversion circuit, and the conversion unit may be one of a reduction type converter, a boost-type converter, and a boost/reduction-type converter.

The conversion unit may further include an insulated transformer transferring the power rectified by the rectifying unit.

The control unit may further include a power compensator compensating for a difference in a comparison result of the first comparator.

The illumination body may include at least one light emitting diode.

## BRIEF DESCRIPTION OF THE DRAWINGS

The above and other aspects, features and other advantages of the present invention will be more clearly understood from the following detailed description taken in conjunction with the accompanying drawings, in which:

FIG. 1 is a schematic block diagram of a power supply apparatus according to an embodiment of the present invention;
FIGS. 2A through 2E are circuit diagrams schematically illustrating an embodiment of the rectifying unit adopted in the power supply apparatus according to the embodiment of the present invention.
FIG. 3 is a flowchart illustrating an operation of the power supply apparatus according to the embodiment of the present invention;
FIG. 4 is a circuit diagram schematically illustrating an embodiment of an LCC resonant inverter and the rectifying unit in the power supply apparatus according to the embodiment of the present invention;
FIG. 5 is a graph illustrating a voltage waveform of output power from an inverter and FIG. 6 is a graph illustrating a waveform of power acquired by rectifying the output power in FIG. 5 through the rectifying unit;
FIG. 7 is a graph illustrating output power depending on output load resistance and FIG. 8 is a graph illustrating output link voltage depending on output load resistance;
FIGS. 9A through 9C are circuit diagrams schematically illustrating an embodiment of a conversion unit adopted in the power supply apparatus according to the embodiment of the present invention;
FIG. 10 is a circuit diagram schematically illustrating an embodiment of the LCC resonant inverter, the rectifying unit, and the conversion unit in the power supply apparatus according to the embodiment of the present invention;
FIG. 11 is a graph illustrating equivalent impedance depending on switch operating duty ratio of the conversion unit illustrated in FIG. 10;
FIG. 12 is a graph illustrating output power depending on the switch operating duty ratio of the conversion unit illustrated in FIG. 10 and FIG. 13 is a graph illustrating output link voltage depending on the switch operating duty ratio of the conversion unit illustrated in FIG. 10;
FIG. 14 is a circuit diagram schematically illustrating an embodiment of the power supply apparatus of the present invention and FIG. 15 is a graph illustrating an operating signal waveform of a control unit adopted in the power supply apparatus according to the embodiment of the present invention illustrated in FIG. 14;
FIG. 16 is a circuit diagram schematically illustrating the power supply apparatus according to another embodiment of the present invention and FIG. 17 is a graph illustrating an operating signal waveform of the control unit adopted in the power supply apparatus according to another embodiment of the present invention illustrated in FIG. 16; and

FIGS. 18 and 19 are simulation graphs of the power supply apparatus according to an embodiment of the present invention.

## DETAILED DESCRIPTION OF THE EMBODIMENTS

Hereinafter, embodiments of the present invention will be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art.

In the drawings, the shapes and dimensions of elements may be exaggerated for clarity, and the same reference numerals will be used throughout to designate the same or like elements.

A case in which any one part is connected with another part includes a case in which the parts are directly connected with each other and a case in which the parts are indirectly connected with each other with other elements interposed therebetween.

In addition, unless explicitly described otherwise, "comprising" any components will be understood to imply the inclusion of other components but not the exclusion of any other components.

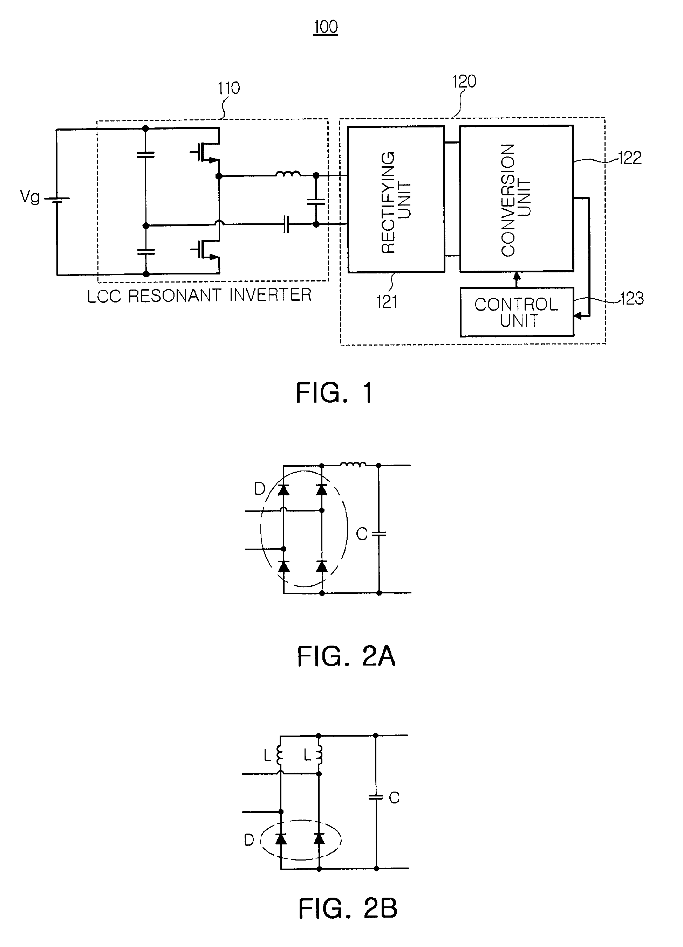

FIG. 1 is a schematic block diagram of a power supply apparatus according to an embodiment of the present invention.

Referring to FIG. 1, a power supply apparatus 100 according to an embodiment of the present invention may include an inverter 110 and a converter 120.

The inverter 110 may convert input power into alternating current (AC) power, and particularly, may be a resonant inverter, and more particularly, may be an inductor-capacitor-capacitor (LCC) resonant inverter.

The inverter 110 may be adopted as the ballast stabilizer, and more particularly, for fluorescent lamp.

The converter 120 may convert the AC power having the preset level output from the inverter 110 into direct current (DC) power through rectification.

That is, the converter 120 supplies the DC power to not an illumination body, more specifically, supplies the DC power to at least one light emitting diode to drive the light emitting diode.

As a result, the converter 120 is coupled to the inverter 110 or to the ballast stabilizer for the fluorescent lamp, already provided on a wall surface or a ceiling to drive the light emitting diode. As a result, the power supply apparatus may be coupled to an existing illumination circuit without replacing the ballast stabilizer for the fluorescent lamp to easily drive the light emitting diode.

However, the inverter 110 (the ballast stabilizer for the fluorescent lamp) is suitable for the fluorescent lamp, and as a result, a power imbalance between the converters 120 may occur.

To this end, the converter 120 may include a rectifying unit 121 rectifying the AC power of the inverter 110, a conversion unit 122 switching and converting the rectified AC power having the preset level into DC power in response to a control signal, and a control unit 123 decreasing an input/output voltage conversion ratio by decreasing a valid switching duty ratio of the conversion unit 122 when a level of the DC power of the conversion unit 122 is equal to or lower than a target level and increasing the input/output voltage conversion ratio by increasing the valid switching duty ratio of the conversion unit 122 when the level of the DC power of the conversion unit 122 is equal to or higher than the target level.

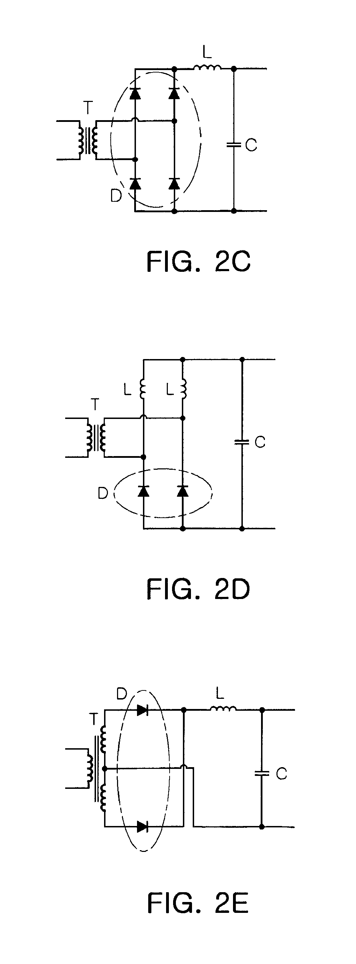

FIGS. 2A through 2E are circuit diagrams schematically illustrating a rectifying unit adopted in the power supply apparatus according to an embodiment of the present invention.

Referring to FIGS. 2A through 2E, a rectifying unit 121 adopted in the power supply apparatus according to the embodiment of the present invention may be a non-insulated full-wave or half-wave rectifying circuit as illustrated in FIGS. 2A and 2B and may be a full-wave or half-wave rectifying circuit through an insulated transformer T as illustrated in FIGS. 2C to 2E.

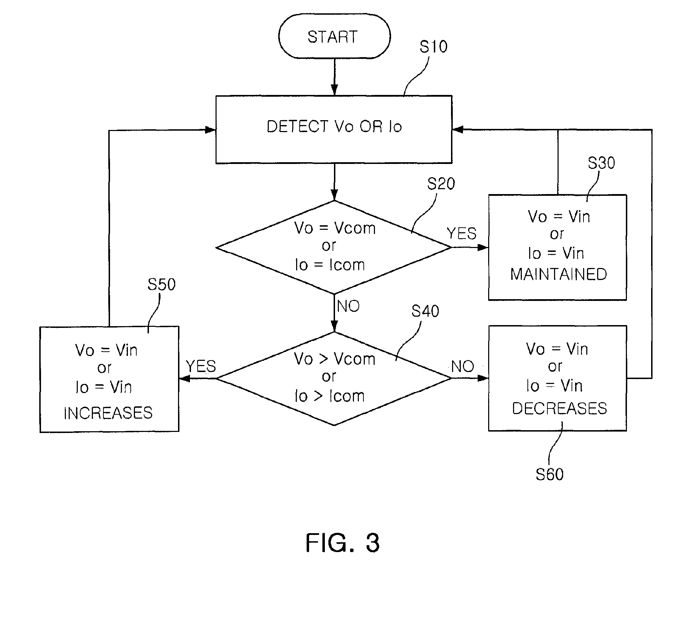

FIG. 3 is a flowchart illustrating an operation of the power supply apparatus according to the embodiment of the present invention.

Referring to FIG. 3, the power supply apparatus according to the embodiment of the present invention detects voltage or current (Vo or Io) of the conversion unit 122 (S10) to maintain an input/output voltage or current ratio (Vo/Vin or Io/Iin) when the detection voltage or current (Vo or Io) is the same as a comparison result of a command value (Vcom or Icom) (S20), increase the input/output voltage or current ratio (Vo /Vin or Io / Iin) (S50) when the detection voltage or current (Vo or Io) is higher than the command value (Vcom or Icom) (S40), and decrease the input/output voltage or current ratio (Vo /Vin or Io / Iin) when the detection voltage or current (Vo or Io) is lower than the command value (Vcom or Icom) (S60).

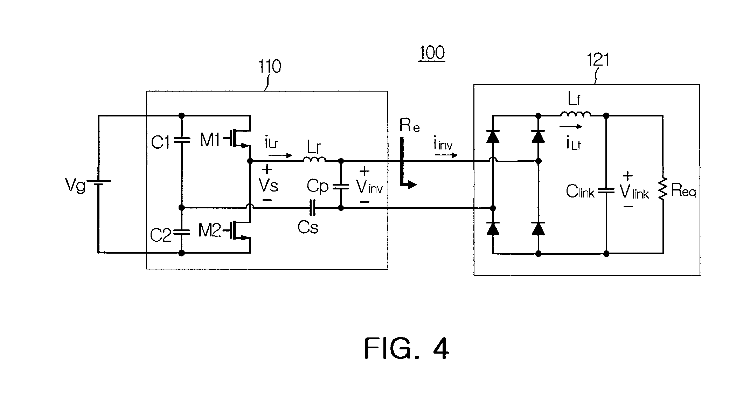

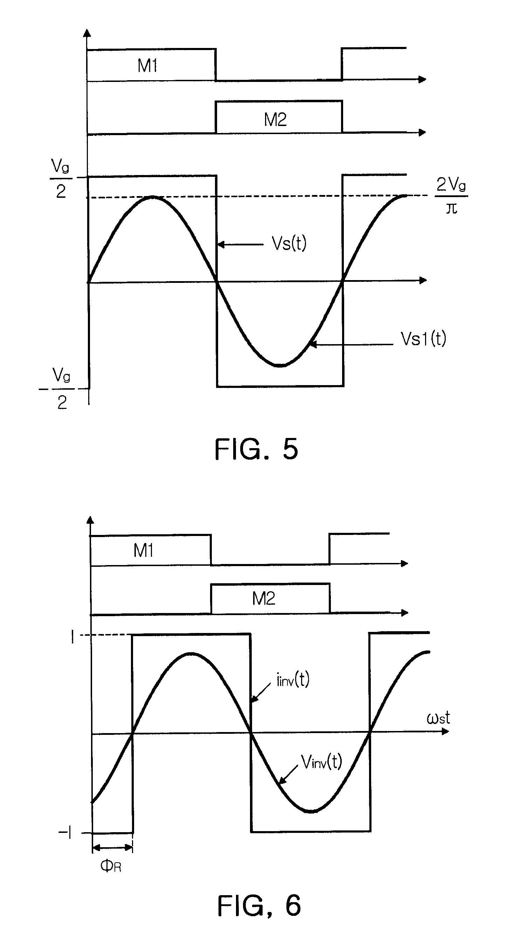

FIG. 4 is a circuit diagram schematically illustrating the LCC resonant inverter and the rectifying unit in the power supply apparatus according to an embodiment of the present invention, FIG. 5 illustrates a voltage waveform of output power from the inverter, and FIG. 6 is a graph illustrating a waveform of power acquired by rectifying the output power in FIG. 5 through the rectifying unit.

Referring to FIG. 4, first, in a condition in which a switching frequency is fs and each frequency $2\pi fs = \omega s$, it may be set that all voltage and current in the circuit only have sine waves which are fundamental wave components of the switching frequency, and a current iLf flowing in an inductor Lf has very large capacitance as constant as output load current I = Vlink / Req.

In the case of a DC input voltage Vg, AC rectangular waves of Vg/2 and -Vg/2 may be generated as output voltage Vs as illustrated in FIG. 5 by a switching operation of switches M1 and M2 of the inverter 110. Therefore, when only a fundamental wave component of the output voltage Vs of the inverter 110 is expressed by an equation, Equation 1 below is established.

$$(Equation\ 1)$$

$$v_{s1}(t) = \frac{2V_g}{\pi}\sin(\omega_s t) = V_{s1}\sin(\omega_s t)$$

Meanwhile, when Vinv has only the fundamental wave component of the switching frequency Fs and a phase difference between V, an input voltage of an LCC resonant tank, and $\Phi R$, is present with respect to the rectifying unit of FIG. 4 by the condition above, Vinv may be acquired as in Equation 2 below.

$$(Equation\ 2)$$

$$v_{inv}(t) = V_{inv1}\sin(\omega_s t - \varphi_R)$$

In this case, since the capacitance of Lf is relatively very high, as the current iLf that flows in the inductor Lf is constant as I, current iinv has the same phase as Vinv and has a rectangular wave shape as illustrated in FIG. 5. Therefore, when only a fundamental wave component of iinv is acquired, Equation 3 below may be established.

$$(Equation\ 3)$$

$$i_{inv1}(t) = \frac{1}{n}\frac{4I}{\pi}\sin(\omega_s t - \varphi_R) = I_{inv1}\sin(\omega_s t - \varphi_R)$$

Therefore, equivalent impedance Re viewed at a prior end of the rectifying unit 121 may be acquired by Equation 4 below because current iinv and Vinv have the same phase as each other.

$$(Equation\ 4)$$

$$R_e = \frac{V_{inv}(t)}{i_{inv1}(t)} = \frac{\pi}{4}\frac{V_{inv}}{I}$$

Further, since a final output voltage Vlink is the same as a mean of an absolute value of Vinv, a relationship of Equation 5 below may be satisfied.

(Equation 5)

$$V_{link} = \langle |v_{inv}(t)| \rangle_{T_s} = \frac{1}{T_s/2} \int_0^{T_s/2} V_{inv} \sin(\omega_s t - \varphi_R) dt \rightarrow V_{inv} = \frac{\pi}{2} V_{link}$$

The equivalent impedance Re may be acquired as in Equation 6 below by Equations 4 and 5 above.

(Equation 6)

$$R_e = \frac{\pi}{4}\frac{V_{inv}}{I} = \frac{\pi^2}{8}R_{eq} = 1.2337 R_{eq}$$

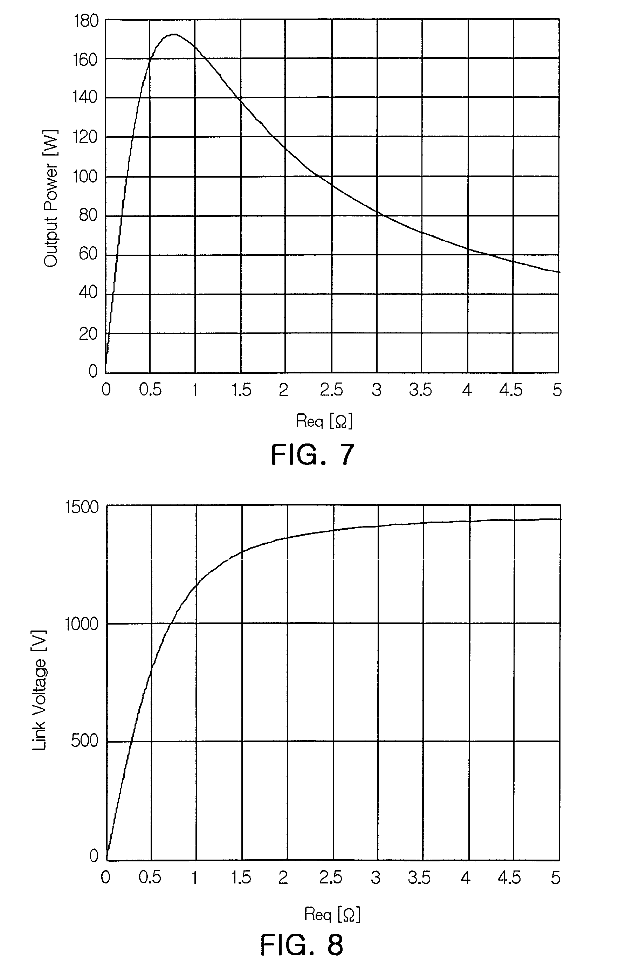

Since the equivalent impedance Re viewed at the prior end of the rectifying unit 121 serves as a load of the inverter 110 as illustrated in FIG. 7, when a voltage conversion ratio H(fs) of Vinv(fs) to Vs1(fs) in a frequency region is acquired, Equation 7 below may be established.

(Equation 7)

$$\frac{V_{inv}(f_s)}{V_{s1}(f_s)} = \|H(f_s)\| = \frac{1}{\sqrt{\left\{1 + \frac{1}{m}(1 - F^2)\right\}^2 + \left\{\frac{1}{Q_e}\left(F - \frac{1}{F}\right)\right\}^2}}$$

Herein

$$f_o = 1/2\pi\sqrt{L_r C_s}, \quad \omega_o = 2\pi f_o, \quad Z_o = \sqrt{L_r/C_s}, \quad m = \frac{C_s}{C_p}, \quad F = \frac{f_s}{f_o}, \quad Q_e = \frac{R_e}{\sqrt{L_r/C_s}} = \frac{R_e}{Z_o}$$

Therefore, Vlink(fs)/Vg, a final input/output relationship equation of a power terminal constituted by the inverter 110 and the rectifying unit 121 is acquired from Equations 1, 5, and 7, Equation 8 below may be established.

(Equation 8)

$$\frac{V_{link}(f_s)}{V_g} = \frac{4}{\pi^2\sqrt{\left\{1 + \frac{1}{m}(1 - F^2)\right\}^2 + \left\{\frac{1}{Q_e}\left(F - \frac{1}{F}\right)\right\}^2}}$$

The illustrated inverter 110 is a half bridge inverter, but when the inverter 110 is configured by a full bridge inverter, resistance is relatively small at the time of considering withstand voltage. the inverter 110 may have a value equal to double a value of Equation 8.

When Vg = 311 V and the switching frequency Fs = 47 KHz based on Equation 8, a graph illustrated as below may be presented with respect to an LCC resonant tank of Cs =20.2 nFm, Lr=2.793mH, and Cp=5.6 nF.

FIG. 7 is a graph illustrating output power depending on output load resistance and FIG. 8 is a graph illustrating output link voltage depending on output load resistance.

Referring to FIGS. 7 and 8, for example, when 80 W of output power is required, 80 W of output power is available when the output load resistance Req is approximately 2 kohm or 31 kohm as illustrated in FIG. 7. However, when the output load resistance Req is 2 kohm, output link voltage Vlink is approximately 350 V, while when the output load resistance Req is 31 kohm, the output link voltage Vlink reaches approximately 1400 V, as illustrated in FIG. 8.

In other words, the output power may be increased and again decreased as the output load resistance is larger, and the output link voltage may be continuously increased and saturated to a predetermined value as the output load resistance is larger.

Therefore, the conversion unit 122 to be substituted for the output load resistance Req may be deduced and the conversion unit 122 may operate in a region where equivalent resistance is relatively small at the time of considering withstand voltage.

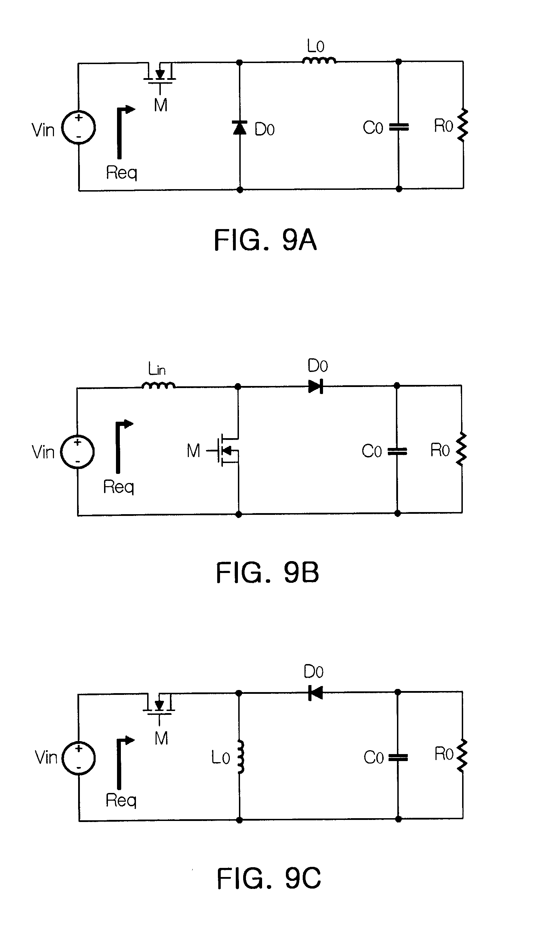

FIGS. 9A through 9C are circuit diagrams schematically illustrating the conversion unit adopted in the power supply apparatus according to an embodiment of the present invention.

As illustrated in FIGS. 9A through 9C, the conversion unit 122 adopted in the power supply apparatus according to the embodiment of the present invention may be constituted by a non-insulated buck converter, a non-insulated boost converter, or a non-insulated buck boost converter.

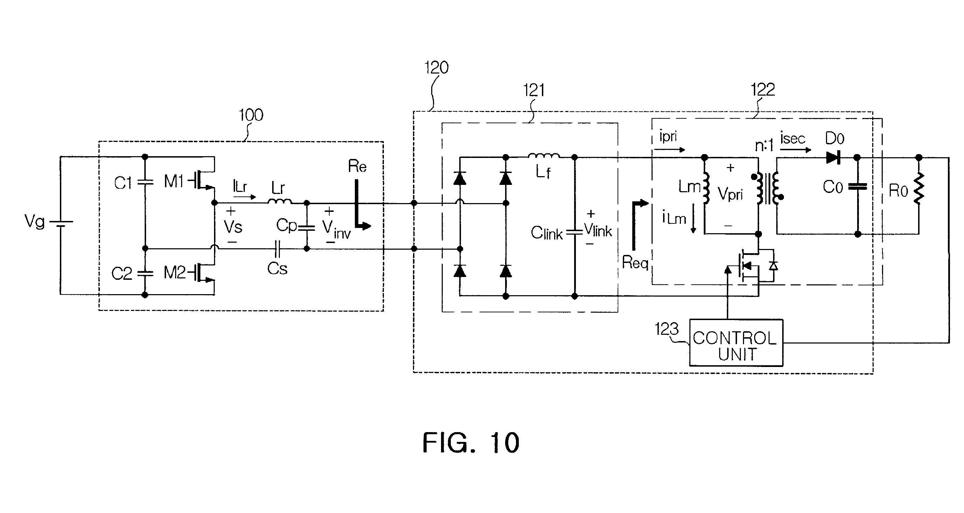

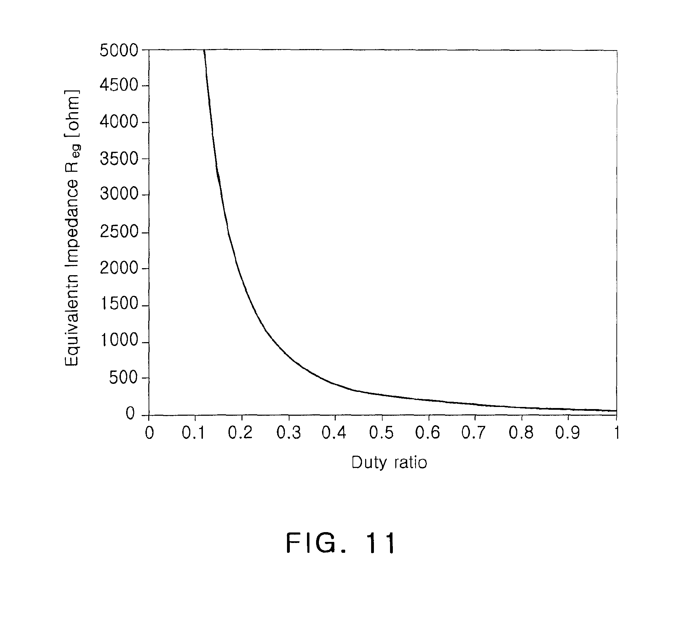

FIG. 10 is a circuit diagram schematically illustrating the LCC resonant inverter, the rectifying unit, and the conversion unit in the power supply apparatus according to an embodiment of the present invention and FIG. 11 is a graph illustrating equivalent impedance depending on switch operating duty ratio of the conversion unit illustrated in FIG. 10.

As illustrated in FIG. 10, the conversion unit 122 may be configured by a DCM flyback converter that operates in a current discontinuous mode, and input power and input current may be acquired by Equation 9 below.

(Equation 9)

$$P_{link} = \frac{1}{2} L_m i_{Lm\_peak}^2 f_{sw} = \frac{1}{2} L_m \left( \frac{V_{link}}{L_m} D T_S \right)^2 f_{sw} = \frac{(V_{link}D)^2}{2L_m} T_S$$

$$I_{pri} = \frac{P_{link}}{V_{link}} = \frac{V_{link}}{2L_m} D^2 T_S$$

Therefore, since the input equivalent impedance is a ratio of link voltage and a primary side current of a transformer, the input equivalent impedance may be acquired by Equation 10 below.

(Equation 10)

$$R_{eq} = \frac{V_{link}}{I_{pri}} = \frac{2L_m}{D^2 T_S}$$

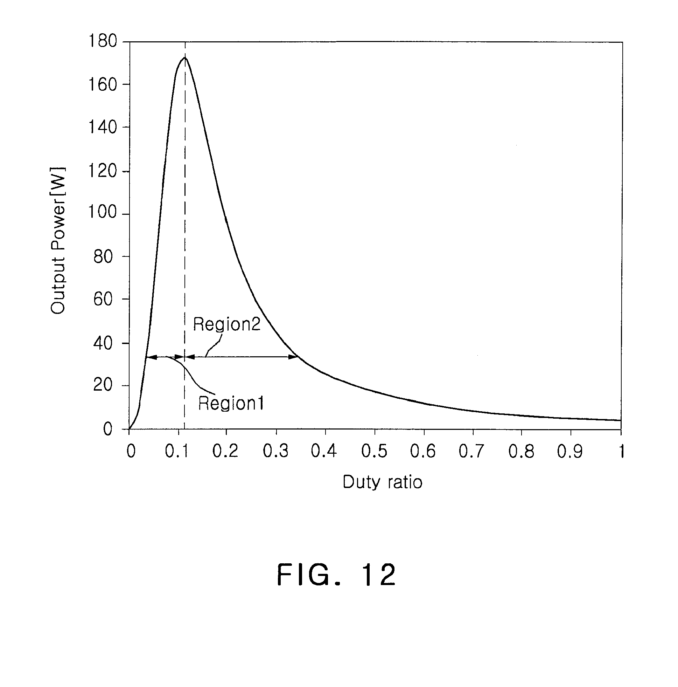

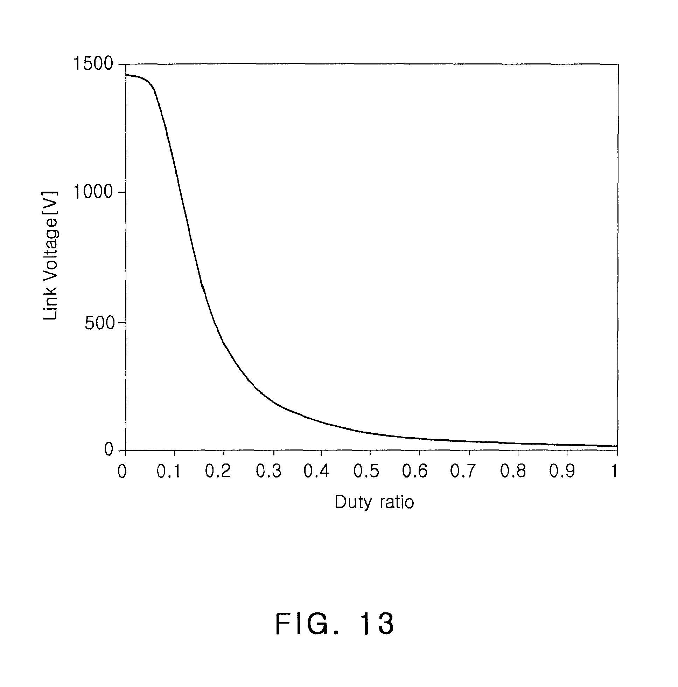

FIG. 12 is a graph illustrating output power depending on the switch operating duty ratio of the conversion unit illustrated in FIG. 10, and FIG. 13 is a graph illustrating output link voltage depending on the switch operating duty ratio of the conversion unit illustrated in FIG. 10.

When the equivalent impedance Req, the link voltage Vlink, and output power Vo are illustrated by using Equations 8 and 10, the equivalent impedance Req, the link voltage Vlink, and output power Vo may be illustrated as in FIGS. 12 and 13.

That is, since the equivalent impedance Req has an unlimited value when the switching operating duty ratio of the conversion unit 122 is '0', the output power may be '0' and the link voltage may have a maximum value, and the equivalent impedance Req is decreased and the output power is increased while the operating duty ratio is gradually increased, and the link voltage may be decreased. Further, when the switch operating duty ratio is further increased to reach the vicinity of 0.11, the output power passes a maximum power point and thereafter, when the operating duty ratio is further increased, the equivalent impedance, the output power, and the link voltage tend to be continuously decreased.

In particular, in a region Region1 in which the switching operating duty ratio is smaller than 0.11, the output power is increased and a variation width is very sensitive as the duty ratio is increased. On the contrary, in a region Region2 where the duty ratio is larger than 0.11, the output power is decreased and the variation width is gentle as the duty ratio is increased. Further, since the equivalent impedance is very large when the switch operating duty ratio is relatively small, the link voltage is very high, while since the equivalent impedance is relatively small when the duty ratio is relatively large, the link voltage is low. Therefore, when an output power control characteristic is considered depending on the circuit withstand voltage and the duty ratio, the conversion unit 122 may operate in the region Region2 where the duty ratio is larger than 0.11.

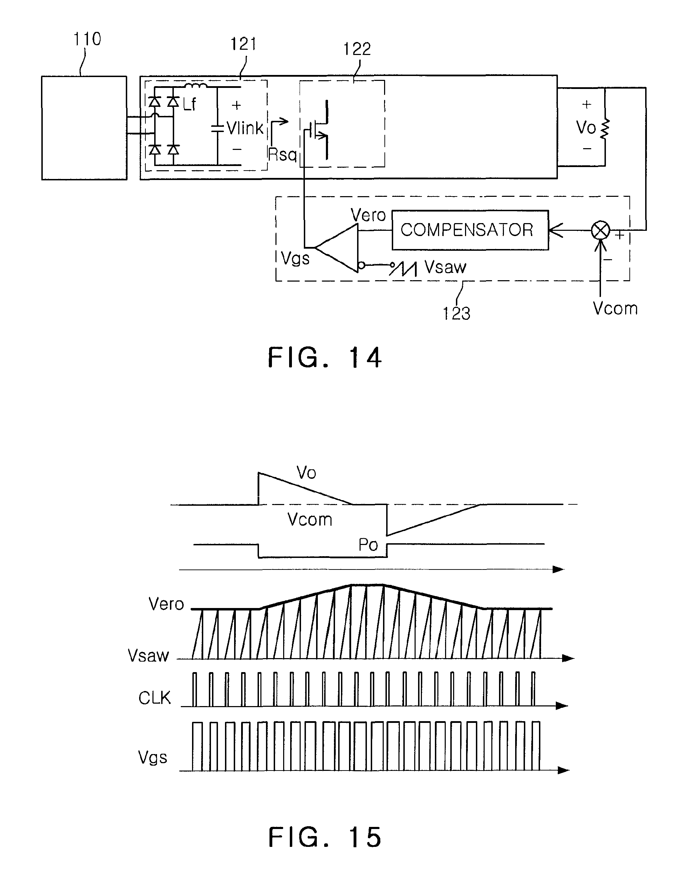

FIG. 14 is a circuit diagram schematically illustrating the power supply apparatus according to an embodiment of the present invention and FIG. 15 is a graph illustrating an operating signal waveform of a control unit adopted in the power supply apparatus according to the embodiment of the present invention illustrated in FIG. 14.

As described above, when the output power control characteristic is considered depending on the circuit withstand voltage and the duty ratio, the conversion unit 122 needs to be operated in the region Region2 where the duty ratio is larger than 0.11. Therefore, when the conversion unit 122 is subjected to a voltage mode control, a first comparator of the control unit 123 implements a positive feedback to receive a signal for detecting the output power through a negative terminal and reference voltage Vcom through a positive terminal, and as a result, since the equivalent impedance Req and the link voltage Vlink of the inverter 110 is increased when the output power is decreased, the output voltage Vo is increased. Accordingly, since the switching operating duty ratio needs to be increased, an output Vero of a power compensator is increased, and as a result, a second comparator outputs a control signal Vgs having the increased switching operating duty ratio to control the output voltage. On the contrary, since the output voltage Vo is decreased when the output power is increased, the output Vero of the power compensator is decreased, and as a result, the second comparator outputs the control signal Vgs having the decreased switching operating duty ratio to control the output voltage of the conversion unit 122. That is, the DC power supplied to the light emitting diode may be controlled.

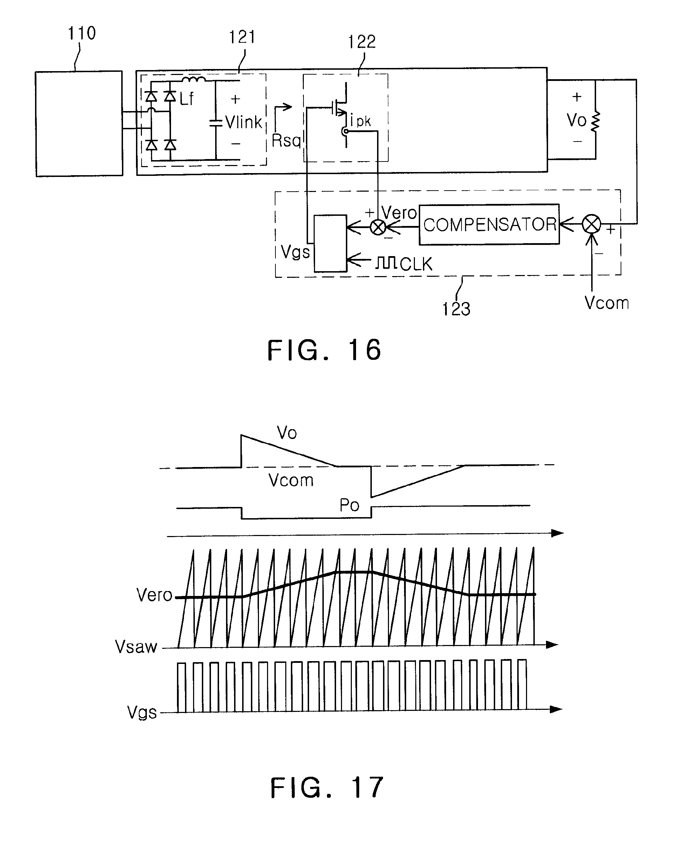

FIG. 16 is a circuit diagram schematically illustrating a power supply apparatus according to another embodiment of the present invention and FIG. 17 is a graph illustrating an operating signal waveform of the control unit adopted in the power supply apparatus according to the embodiment of the present invention illustrated in FIG. 16.

As illustrated in FIG. 16, in the case in which the conversion unit 122 is subjected to the current mode control, since the output voltage is increased when the output power is decreased, the output Vero of the power compensator is increased, and as a result, a peak value ipk of a current flowing through the switch of the conversion unit 122 is increased to thereby control the output voltage. On the contrary, since the output voltage is decreased when the output power is increased, the output Vero of the power compensator is decreased, and as a result, the peak value ipk of the current flowing through the switch of the conversion unit 122 is decreased to thereby control the output voltage.

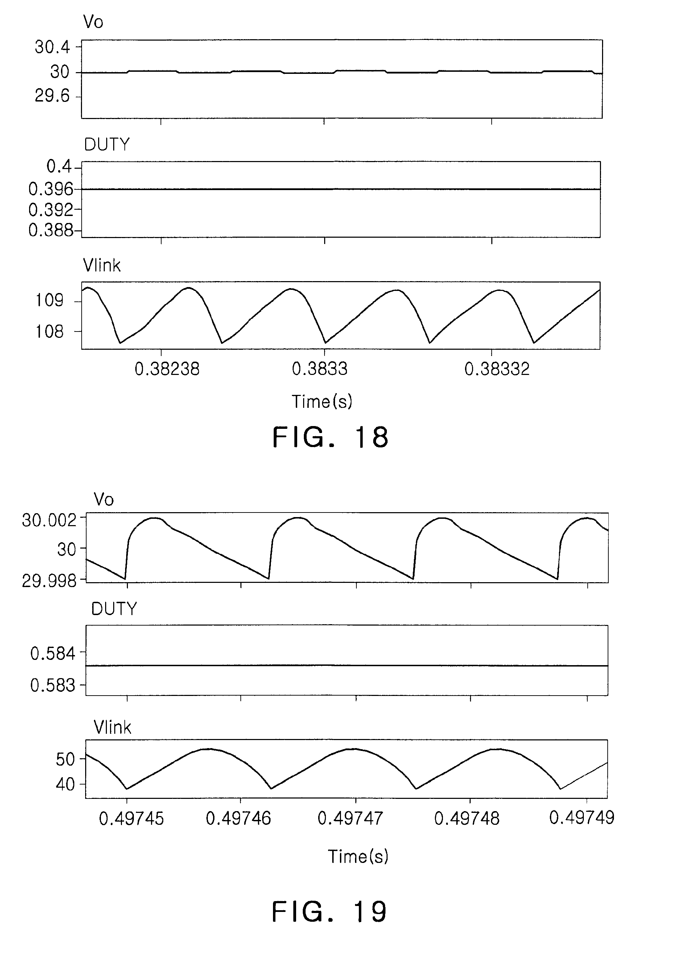

FIGS. 18 and 19 are simulation graphs of the power supply apparatus according to the embodiment of the present invention.

The equivalent impedance, the link voltage, and the final output power calculated from Equations 8 and 10 depending on the operating duty ratio of the conversion unit 122 may be expressed by a table below.

| Duty | Req[ohm] | Vlink[V] | power[W] |
|------|----------|----------|----------|
| 0.1 | 7264.0 | 1109.4556 | 169.45095 |
| 0.2 | 1816.0 | 412.05589 | 93.496726 |
| 0.3 | 807.1 | 189.35164 | 44.422684 |
| 0.4 | 454.0 | 107.13435 | 25.28143 |
| 0.5 | 290.6 | 68.676355 | 16.232247 |
| 0.6 | 201.8 | 47.719535 | 11.285455 |
| 0.7 | 148.2 | 35.06796 | 8.2954749 |
| 0.8 | 113.5 | 26.852145 | 6.3527551 |
| 0.9 | 89.7 | 21.217872 | 5.0201054 |
| 1 | 72.6 | 17.187107 | 4.0665837 |

In Table 1, when the final output voltage is controlled to 30 V, the final output voltage may be accurately controlled as illustrated in FIG. 18 as a simulation result while the final load resistance is set to 35.6 ohm to output the output power of 25.28 W, and the final output voltage may be accurately controlled as illustrated in FIG. 19 as a simulation result while the final load resistance is set to 79.78 ohm to output the output power of 11.29 W.

As described above, according to an embodiment of the present invention, switching of the DC conversion circuit connected to a rear end of the LCC resonant inverter may be controlled to resolve a power imbalance between the LCC resonant inverter and the driving circuit, and in particular, when an LED driving device instead of a fluorescent lamp driving device is coupled to the ballast stabilizer for illumination configured by the LCC resonant inverter, stable driving may be implemented.

As set forth above, according to the embodiments of the present invention, a power imbalance between an LCC resonant inverter and a driving circuit may be resolved by controlling switching of a DC conversion circuit connected to a rear end of the LCC resonant inverter.

While the present invention has been shown and described in connection with the embodiments, it will be apparent to those skilled in the art that modifications and variations can be made without departing from the spirit and scope of the invention as defined by the appended claims.

**Claims**

1. A power supply apparatus for illumination, comprising:

   a conversion unit switching rectified alternating current (AC) power having a preset level and converting the switched power into DC power, and supplying the converted power to an illumination body; and
   a control unit increasing an input-output power duty ratio when a level of the DC power is higher than a target power level and decreasing the input-output power duty ratio when a power level of the DC power is lower than the target power level.

2. The power supply apparatus for illumination of claim 1, further comprising an inverter converting input power into AC power having a preset level.

3. The power supply apparatus for illumination of claim 2, wherein the inverter is a resonant inverter.

4. The power supply apparatus for illumination of claim 3, wherein the resonant inverter is an inductor-capacitor-capacitor (LCC) resonant inverter.

5. The power supply apparatus for illumination of claim 1, wherein the control unit compares the level of the DC power of the conversion unit and the target power level to increase a switching duty of the conversion unit when the level of the DC power is higher than the target power level, decrease the switching duty of the conversion unit when the power level of the DC power is lower than the target power level, and maintain the switching duty of the conversion unit when the power level of the DC power is the same as the target power level.

6. The power supply apparatus for illumination of claim 5, wherein the control unit includes:

   a first comparator forming positive feedback by receiving a predetermined reference voltage through a negative terminal and receiving a detection voltage detecting output power of the conversion unit through a positive terminal to thus compare the reference voltage and the detection voltage; and
   a second comparator comparing a comparison result signal of the first comparator and a predetermined reference signal to control the switching of the conversion unit.

7. The power supply apparatus for illumination of claim 5, wherein the control unit includes:

   a first comparator forming positive feedback by receiving a predetermined reference voltage through a negative terminal and receiving a detection voltage detecting output power of the conversion unit through a positive terminal to thus compare the reference voltage and the detection voltage;
   a second comparator comparing a comparison result signal of the first comparator with a detection current detecting a current generated in switching performed by the conversion unit; and
   an RS latch controlling the switching of the conversion unit by logically operating a predetermined reference clock signal and a comparison result of the second comparator.

EP 2 731 249 A1

8. The power supply apparatus for illumination of claim 1, further comprising a rectifying unit including a half wave or full wave rectifying circuit to supply the rectified power to the conversion unit.

9. The power supply apparatus for illumination of claim 8, wherein the rectifying unit further includes an inductor-capacitor (L-C) filter or a capacitor (C) filter.

10. The power supply apparatus for illumination of claim 1, wherein the conversion unit is configured by one of an insulated conversion circuit and a non-insulated conversion circuit.

11. The power supply apparatus for illumination of claim 1, wherein the conversion unit is one of a reduction type converter, a boost-type converter, and a boost/reduction-type converter.

12. The power supply apparatus for illumination of claim 10, wherein the conversion unit further includes an insulated transformer transferring the rectified power.

13. The power supply apparatus of claim 6, wherein the control unit further includes a power compensator compensating for a difference in a comparison result of the first comparator.

14. The power supply apparatus of claim 7, wherein the control unit further includes a power compensator compensating for a difference in a comparison result of the first comparator.

15. The power supply apparatus for illumination of claim 1, wherein the illumination body includes at least one light emitting diode.

100

FIG. 1

FIG. 2A

FIG. 2B

FIG. 2C

FIG. 2D

FIG. 2E

START

S10

DETECT Vo OR Io

S20

Vo = Vcom
or
Io = Icom

YES

S30

Vo = Vin
or
Io = Vin
MAINTAINED

NO

S40

Vo > Vcom
or
Io > Icom

NO

Vo = Vin
or
Io = Vin
DECREASES

S60

YES

S50

Vo = Vin
or
Io = Vin
INCREASES

FIG. 3

FIG. 4

FIG. 5

FIG, 6

FIG. 7

FIG. 8

FIG. 9A

FIG. 9B

FIG. 9C

FIG. 10

FIG. 11

FIG. 12

FIG. 13

FIG. 14

FIG. 15

FIG. 16

FIG. 17

FIG. 18

FIG. 19

## EUROPEAN SEARCH REPORT

**Application Number**

EP 13 27 5137

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 10 2010 003266 A1 (OSRAM GMBH [DE]) 29 September 2011 (2011-09-29) | 1-12,15 | INV. H02M7/217 H05B33/08 |
| A | * paragraphs [0032], [0036]; figures 4,8 * | 13,14 | |
| | ----- | | ADD. H02M1/00 |
| Y | US 2010/195359 A1 (YAMAKI MOTOI [JP]) 5 August 2010 (2010-08-05) * paragraph [0064] - paragraph [0072]; figure 2 * | 1-8,15 | |
| | ----- | | |
| Y | US 2005/162858 A1 (SHIOTSU FUMINORI [JP] ET AL) 28 July 2005 (2005-07-28) * paragraph [0029] - paragraph [0033]; figure 1 * | 1-9,15 | |
| | ----- | | |
| Y | US 2011/043127 A1 (YAMASAKI SHIGEAKI [JP]) 24 February 2011 (2011-02-24) | 1,9-12, 15 | |
| A | * paragraph [0081] - paragraph [0084]; figures 1-6,8 * * paragraph [0036] - paragraph [0049] * | 2-8,13, 14 | |
| | ----- | | TECHNICAL FIELDS SEARCHED (IPC) |
| Y | EP 2 405 719 A1 (PANASONIC ELEC WORKS CO LTD [JP] PANASONIC CORP [JP]) 11 January 2012 (2012-01-11) * paragraph [0014] - paragraph [0020]; figure 1 * | 1 | H02M H05B |
| | ----- | | |
| Y | EP 2 482 618 A2 (TEKNOWARE OY [FI]) 1 August 2012 (2012-08-01) * paragraphs [0003] - [0004], [0019], [0039]; figures 1c,4 * | 1 | |
| | ----- | | |

The present search report has been drawn up for all claims

| Place of search | Date of completion of the search | Examiner |
|---|---|---|
| Munich | 13 February 2014 | Kruip, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 27 5137

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2014

| Patent document cited in search report | | Publication date | Patent family member(s) | | Publication date |
|---|---|---|---|---|---|
| DE 102010003266 | A1 | 29-09-2011 | NONE | | |
| US 2010195359 | A1 | 05-08-2010 | CN | 101795079 A | 04-08-2010 |
| | | | JP | 4930522 B2 | 16-05-2012 |
| | | | JP | 2010183668 A | 19-08-2010 |
| | | | US | 2010195359 A1 | 05-08-2010 |
| US 2005162858 | A1 | 28-07-2005 | JP | 4170924 B2 | 22-10-2008 |
| | | | JP | 2005206074 A | 04-08-2005 |
| | | | US | 2005162858 A1 | 28-07-2005 |
| US 2011043127 | A1 | 24-02-2011 | JP | 2011044316 A | 03-03-2011 |
| | | | US | 2011043127 A1 | 24-02-2011 |
| EP 2405719 | A1 | 11-01-2012 | EP | 2405719 A1 | 11-01-2012 |
| | | | JP | 5379921 B2 | 25-12-2013 |
| | | | JP | 5379922 B2 | 25-12-2013 |
| | | | JP | 2012033459 A | 16-02-2012 |
| | | | JP | 2013101987 A | 23-05-2013 |
| | | | JP | 2013101988 A | 23-05-2013 |
| EP 2482618 | A2 | 01-08-2012 | EP | 2482618 A2 | 01-08-2012 |
| | | | US | 2012299494 A1 | 29-11-2012 |

EPO FORM P0459

For more details about this annex : see Official Journal of the European Patent Office, No. 12/82

**EP 2 731 249 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120126324
- KR 1020120098441